# EUROPEAN PATENT SPECIFICATION

(11) **EP 0 474 449 B1**
(45) Date of publication and mention of the grant of the patent: **28.06.1995**
(21) Application number: 91308019.8
(22) Date of filing: 02.09.1991
(51) Int. Cl.: F16L 11/118, F16L 11/11, B29C 53/30, B29D 23/18

(54) **Improvements in plastic tubing**
Verbesserung von Kunststoffrohren
Perfectionnement aux tubes en matière plastique

(30) Priority: 01.09.1990 GB 9019088
(43) Date of publication of application: 11.03.1992
(73) Proprietor: ANDREW JOHN WHITWORTH, AND DOROTHY WHITWORTH, IN PARTNERSHIP AS GRANGE TUBES, Grange-over-Sands, Cumbria, LA11 6BG (GB)
(72) Inventor: Withworth, Andrew John, Grange-over-sands, Cumbria (GB)
(74) Representative: W.P. Thompson & Co.

(56) References cited:
- EP-A- 0 262 735
- FR-A- 1 354 863
- GB-A- 2 126 685
- US-A- 3 313 319

## Description

The present invention relates to plastics tubing and a method of manufacturing same. More particularly it relates to corrugated plastics tubing and a method of manufacturing same.

In order to produce plastics tubing which is flexible, preformed annular plastics tubing has to date been selectively shaved to introduce circumferential corrugations, or plastics tubing has been preformed by processes which concertina the plastics material as it sets. Thus, the method of the present invention differs in that it displaces material by compression.

The corrugated products made by those processes which concertina the product have walls which are substantially uniform in thickness throughout. The methods used have of course on occasions resulted in products which are not as uniform in thickness as has been desired. Tape wrapping or mandrel-less vacuum forming, methods which bend or introduce folds into the tube, have a tendency to produce a corrugated tube with very slightly thinner radially outwardly projecting peaks and very slightly thicker radially inwardly projecting roots. However, these products are screened so that only those of substantially uniform thickness are selected. This is because it has been suggested that if the inner wall is thicker or thinner than the outer wall, the product will suffer from less than optimum flex-life, burst strength, and abrasion resistance. Processes using a wire and mandrel and a plain cylindrical tube also produce uniform products.

These preforming processes concertina or fold the tube by exerting a force at points along the tube sufficient to cause localised bending of the plastics, but insufficient to cause displacement by compression of the tube. In other words, the force acts in a retaining sense, simply to hold a corrugated form during heat treatment. In this way the desired shape is maintained until the plastics has set.

A tube and a method of producing a tube according to the preambles of independent claims 1 and 13, respectively, is known from GB-A-2 126 685.

FR 1,354,863 discloses a method for forming convoluted plastics tubes in which a cutter wheel is applied to the outside of a tube which is in a plastic state. However, because the plastics is in a plastic state, it is not possible to subject the tube to a compression force sufficient to take the plastics of the tube beyond its elastic point. To do this the compression force must be applied to plastics at a temperature below its melting point.

It has unexpectedly been found that, by making the root walls of a corrugated tube thinner than the peak walls favourable characteristics in the tube are produced without detrimental effect to the product.

The preferred way of achieving this has been to displace material from the root region of the tube using compressive forces.

It has been found that, for example:
(1) The flexibility of a product having a given inside diameter and outside diameter or a given mass per unit length can be increased by reducing the thickness at the roots.
(2) The minimum bend radius can be decreased for a product having a given inside diameter and a given outside diameter by reducing the wall thickness at the roots, and
(3) Increased flexibility and a decreased minimum bend radius of smooth bore tubing can be obtained by reducing the wall thickness at the roots.

The displacement resulting from compression can also be responsible for providing an increase in crush resistance for a product with a given mass per unit length.

Furthermore, where the products are made from PTFE and have not been cut away, the structure can be returned to its original form by heat treatment.

Accordingly there is provided a corrugated plastics tube, having a wall with an inner surface and an outer surface, and corrugations which define a series of peaks and roots along the tube, the thickness of the wall between the inner surface and outer surface of the wall at the peaks, the peak wall thickness W, is greater than the thickness between the inner surface and outer surface of the wall at the roots, the root wall thickness W₁, characterised in that the tube has been subjected to a compression force to displace material in the root region, and the compression force applied was sufficient to take the plastics of the tube beyond its elastic point.

In accordance with a further aspect of the present invention, there is provided a method of producing a corrugated tube having a series of peaks and roots wherein the tube is thinned at its root region by the application of a compressive force which compressive force displaces material from the root region of the tube, characterised in that the compressive force is sufficient to take the plastics of the tube beyond its elastic point.

That compression has been used to displace, as oppose to remove material, can be checked in the case of PTFE by seeing if the product can revert to its original form under heat treatment.

For other thermoplastics such a high density polyethylene, the product of the invention can be distinguished from the prior art by testing its tensile strength at break point. The product of the invention will have a much greater tensile strength at break point than a product with an equivalent cross sectional area which has not been subjected to compression to displace material in the root region.

The reason for this can best be explained by considering the relationship between stress and strain on a thermoplastics tube. The application of stress (i.e. a compression which gives rise to displacement) puts a strain on the material and gives rise to an extension.

Fig. 8 is representative of a typical stress/strain relationship for high density polyethylene at different temperatures. As the stress is increased, the HDPE is displaced and gets thinner. Under a given stress it reaches its elastic point "E". Up until this point the stretch is reversible. Once the elastic point is reached the product is irreversibly stretched, and will go on to break when its breaking point "X" is reached. If it is released after it has been stretched beyond its elastic point, it can only contract by a little (some 8 % at 23°C). Referring to Fig. 8, it can be seen that at 23°C the breaking point X is reached at a stress of 45N/mm² or under a strain of 450%.

At the breaking point 'X', the area of the sample can be shown by experiment to have decreased by 5.5 fold. Thus the apparent stress of 45 N/mm² is really a stress of 45x5.5 or 247.5 N/mm².

Thus by thinning the root for a given volume of material, greater flexibility can be achieved. To do this the material of the tube should be compressed to displace the material. The force applied should be sufficient to take the material beyond its elastic point but just short of its breaking point X to give maximum flexibility.

The material may also be compressed to beyond its breaking point X to give even greater flexibility, but a reduction in tensile strength will also result.

The volume of the material should remain substantially unchanged, since it is the resulting displacement of material, at substantially 90° to the compression force, which gives rise to the beneficial results.

It has been found that HDPE may be compressed and displaces to 20% of its original wall thickness (= 400% tensile strain) at 23°C before a reduction of tensile strength begins to occur.

Similarly HDPE may be compressed and displaced to 14% of its original wall thickness (=600% tensile strain )at 60°C before reduction of tensile strength begins to occur.

A simple way to check the difference between a product in which the root region has been thinned by displacement and a moulded or machined equivalent is to perform a tensile test on the finished product. Providing equivalent materials are used, the compressed and displaced product will fail at a substantially higher tensile load:- For example, a tube compressed to 14% of its original wall thickness at 60°C can be subjected to 7 times the tensile load of an equivalent uncompressed product without failure.

It will be apparent that, various materials and processing temperatures may be used to produce a product according to this patent.

The aforementioned product can be produced by taking a state of the art convoluted plastics tube, such as that manufactured according to UK Patent No. 1543586. The convoluted plastics tube is slid over a suitably sized close fitting mandrel. A helical tool with an internal diameter which is greater than the outside diameter of the mandrel, but less than the combined diameter of the outside diameter of the mandrel and twice the wall thickness of the convoluted plastics tube is brought into contact with the tube so that a pressure sufficient to displace material from the root region thereby thinning it is achieved. Heating is preferable but not essential. The leading end of the tool is kept hot whilst the following end of the tool is kept cold. The helical tool is then helically wound along the mandrel allowing sufficient time to permit the hot end of the tool to warm up the plastics material to heat treatment temperature at the root region of the tube. The helical tool (and rolling elements may be included with the helical tool depending on the configuration required and the plastics used) is continually wound to the end of the tube where the finished plastics tube with roots which are thinned, i.e. in which the peak wall thickness is greater than the root wall thickness, is produced.

Furthermore, different shapes can be produced. In one embodiment a single start spiral corrugation may be formed. Alternatively multiple start spiral corrugations, annular corrugations, axial corrugations or a combination thereof can be produced. The specific shapes can be altered, and further examples are given with reference to the specific description.

By reducing the wall thickness at the roots of the corrugations to approach 1% of the original or peak wall thickness the most favoured results can be obtained. Thus a reduction by between 3% through 95% to 99%, more preferably 10% through 95% to 99% of the peak wall thickness is preferred since the flexibility of the tube is improved, and thus a lower force is required to bend a given length through a given angle.

The preferred percentage will be dependent on the thermoplastic used.

For high density polyethylene, it is preferred to thin the original wall to as little as 5% of its original value i.e. the wall thickness should be reduced by 95%.

To benefit substantially from the thinning, the root wall should be thinned from 60% to 1% of its original value, though 50%, 40%, 30%, 20%, 10% and 5%.

For PTFE the root wall should be thinned from 60% to 5% preferably 50% to 5%, of its original value. For a fully corrugated shape the root wall should be thinned from 60 to 20% preferably 50% and for a smooth bore shape from 20% to 3% preferably 10%.

Other thermoplastics such as polyethylene and polypropylene can be thinned to similar degrees.

Furthermore, a reasonable width to the thinned region is preferred.

Likewise a radiussed rather than square edge to the thinned region is preferred.

As far as the width of the thinned area is concerned, working from original wall thickness, the width should be 10% - 200% of the peak wall thickness for smooth bore type constructions and typically 30 - 600% of peak wall thickness for fully corrugated constructions. As the width tends to a greater percentage so the flexibility of the product increases.

If the corrugations are made using compressive forces to displace material, as opposed to by removing material, an increase in crush resistance may be achieved.

Specific embodiments of the present invention will now be described, by way of example only, with reference to the accompanying drawings, in which:-
Fig.1 is a perspective view, in part longitudinal-section, of a circumferentially corrugated tube according to one aspect of the invention;
Fig.2 is an enlarged longitudinal-sectional view, in exaggerated form, of part of the tube of Fig.1;
Fig.3 is an end view of a second embodiment of the invention, which shows axial corrugations;
Fig.4 is an end view of a third embodiment showing axial corrugations;
Figs. 5a, 5b, 5c, 5d and 5e are longitudinal sectional views of one side only of further embodiments of radially corrugated tubes;
Fig.6 is a diagrammatic representation comprising two tubes; (a) a standard corrugated tube and (b) a tube which has been compressed so that displacement occurs. It shows the comparative areas at their respective roots and peaks when each has been made from a given weight of plastic;
Fig.7 is a diagrammatic representation showing the resulting stiffness and minimum bend radius that result when the wall thicknesses at the root of a tube is altered relative to that of a standard; and
Fig. 8 is a graph of stress vs strain for HPDE thermoplastics.

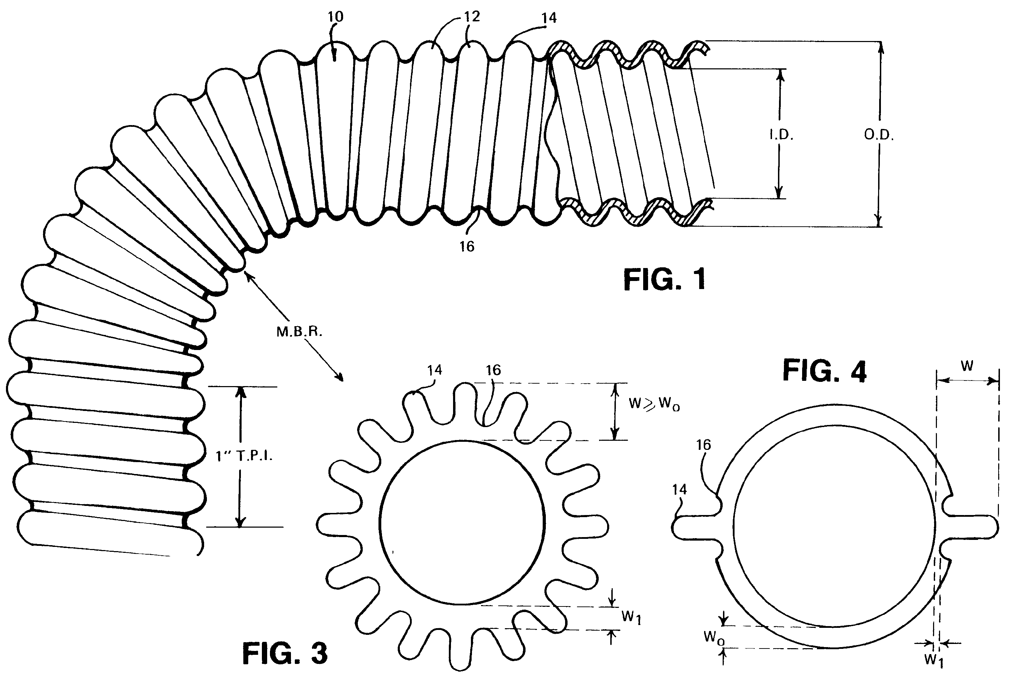

Fig.1 shows a plastic spirally corrugated tube 10 having an outermost or outside diameter OD and an innermost or inside diameter ID. The tube corrugations 12 define a series of peaks 14 and roots 16. The tube has a minimum bend radius MBR which is determined by experiment and is the radius around which the tube may be bent so that the inside diameter is reduced to not less than 85% of its normal (unbent) inside diameter. The tube is a single start helical corrugated tube. Its corrugations enable the tube to be bent around an object without substantially reducing the inside diameter, that is the tubing may be bent around corners or flexed without impeding flow of liquids or fluids through the tube. By decreasing the minimum bend radius the tube can be bent more tightly. The flexibility of the tube can be increased by introducing more corrugations for a given length and decreasing the root wall thickness. The number of corrugations is expressed as turns per inch (TPI) and the tube 10 has a TPI of 3 (3 turns per 25.4 mm).

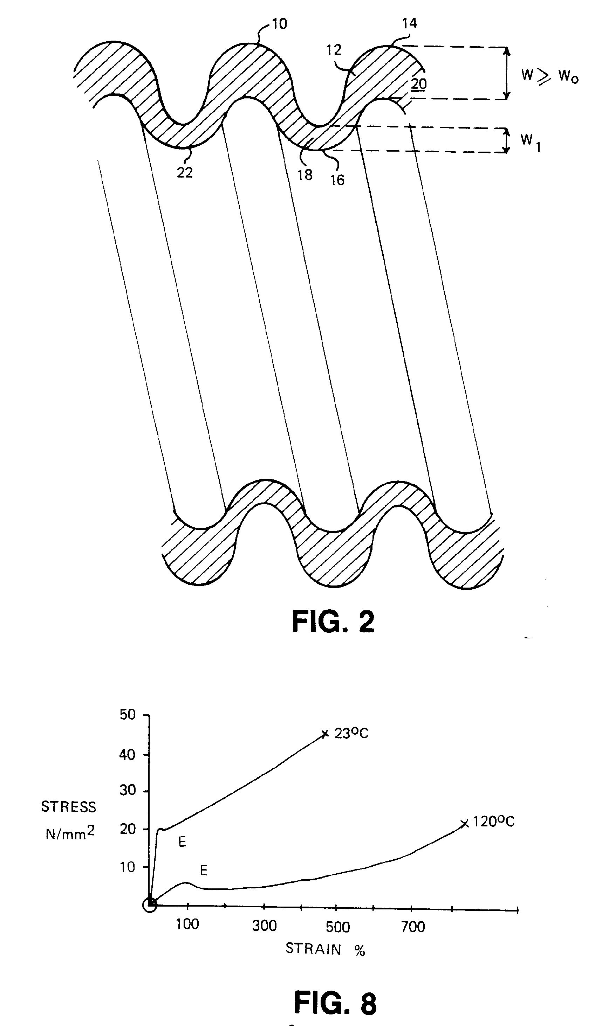

The invention can be more clearly explained by referring to Fig.2.

The PTFE tube 10 has a root wall thickness W₁ which is less than the peaks wall thickness W. Where the root wall thickness W₁ has been reduced during construction from a standard wall thickness W₀ by compressing the tube to displace material the corrugated tube can be caused to revert to a non-corrugated form, of thickness W₀, its original thickness by heat treatment.

This phenomena is perculiar to PTFE.

If during the tubes construction, the root wall thickness W₁ has been reduced by cutting plastics away, then the product can not revert to its original form.

Furthermore compression and displacement can cause the peak wall thickness to be greater than the original wall thickness W₀, and again if the tube is constructed of PTFE it is capable of reverting to its original form of wall thickness W₀ on heat treatment.

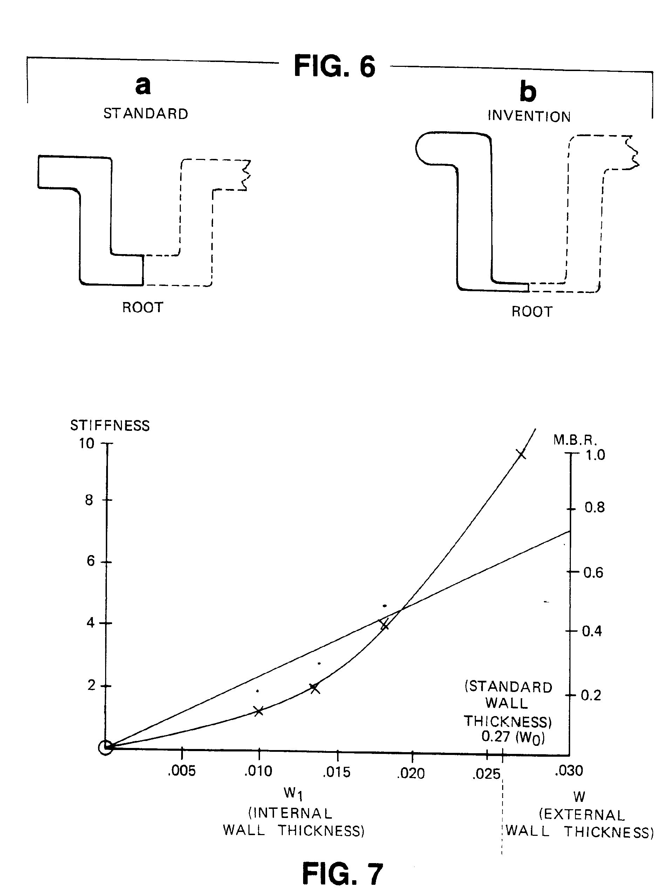

The effect of reducing W₁ relative to W can be seen more clearly with reference to Fig.7 which shows the effect of altering the root wall thickness W₁ and/or the peak wall thickness W relative to W₀, a standard wall thickness.

Fig.7 shows the resulting stiffness and MBR for PTFE tubing by comparison to a tube having a TPI value of 9, (9 turns per 25.4mm) a standard wall thickness W₀ of 0.027 inches (0.68mm), an inside diameter of 0.350 inches (8.89mm) and an outside diameter of 0.500 inches (12.7 mm).

Different PTFE tubes were made in which only the wall thickness was altered. The root wall thickness W₁ was decreased, or the peak wall thickness W was increased.

To determine the flexibility (stiffness), six inch long (152.4mm) corrugated tubes were bent through 90 degrees and the force required measured. From the results obtained it was apparent that the relationship between the rootwall thickness W₁ and the stiffness was as follows:
Stiffness ≃ K (W₁)², and by similar experiment MBR ≃ K (W₁)
where k is a constant
i.e. doubling W₁ relative to W or W₀ quadruples stiffness;
(decreasing W₁ relative to W or W₀ increases flexibility)
and doubling W₁ relative to W or W₀ doubles the minimum bend radius.

By making W₁ approximately 0.95 x W or W₀ it has been found that an improvement in flexibility of about 10% results. It has been found that to increase flexibility to a maximum W₁ should be at least 0.03 x W and preferably 0.01 x W. This has been found to be the practical limit beyond which irreversible damage occurs.

By making W₁ smaller the crush resistance of the tube may also improve. Preferring to Fig.6, comparison of Figs. (a) and (b) indicates that the tube embodying one aspect of the invention, whilst having a total area identical to the standard tube (and which also has an equivalent weight per unit length), has a reduced area at the root of the corrugation, by comparison with the walls of a standard tube thus giving a relative increase in the outer diameter of the tube in comparison with a standard tube. This relative increase in the outside diameter provides a greater crush resistance for a structure containing the same weight of plastics because the second moment of area of the wall section is increased.

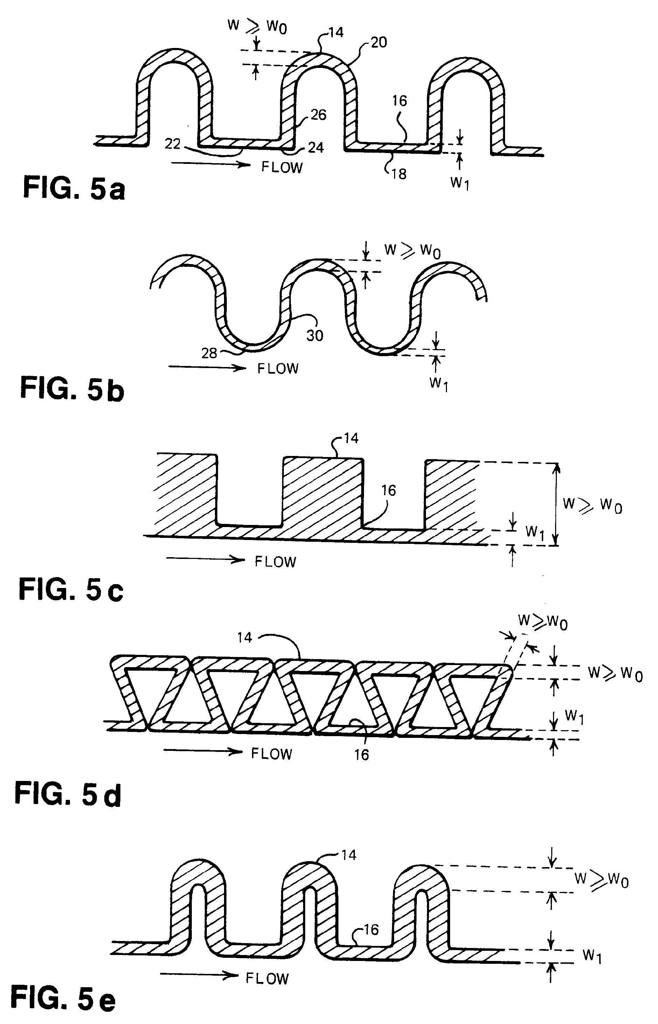

Other examples of radial corrugations are shown in Fig.5. Fig.5a shows a radially corrugated tube in part cross section. The tube has roots 16 each having walls 18 of reduced wall thickness W₁ and peaks 14 having walls 20 of standard thickness W₀. The inner face 22 against which fluid passes when passing through the tube is therefore also corrugated. It does, however, have planar portions 24 and inwardly concave portions 26.

The configuration shown in Fig.5b has greater flexibility than that shown in Fig.5a, but has poorer flow qualities due to the inner face 22 being alternately inwardly convex 28 and inwardly concave 30.

The configuration shown in Fig.5c provides better flow qualities since the central bore is planar and not corrugated, yet due to the provisions of corrugations on the outermost wall, has added flexibility.

The configuration shown in Fig.5d produces the greatest flexibility due to the tightness of the corrugations. For similar reasons the configuration in Fig.5e produces great flexibility.

In order to provide radial flexibility, axial corrugations can be introduced, as shown in Fig. 3. In such forms the peaks 14 and roots 16 extend along the tube's main axis. The reduced root wall thickness W₁ compared with the peak wall thickness W gives rise to improved compressibility i.e. decreased crush resistance.

As a result of compressing the root 16 to give a reduced wall thickness W₁, displacement can also occur giving rise to a wall thickness W which is increased compared with the standard wall thickness W₀.

## Claims

1. A corrugated plastics tube, having a wall with an inner surface and an outer surface, and corrugations which define a series of peaks and roots along the tube, the thickness of the wall between the inner surface and outer surface of the wall at the peaks, the peak wall thickness W, is greater than the thickness between the inner surface and outer surface of the wall at the roots, the root wall thickness W₁, in which the tube has been subjected to a compression force to displace material in the root region, characterised in that the compression force applied was sufficient to take the plastics of the tube which is at a temperature below its melt temperature beyond its elastic point.

2. A tube as claimed in claim 1, in which the inner surface of the tube is substantially planar.

3. A tube as claimed in claim 1, in which the inner surface of the tube is corrugated.

4. A tube as claimed in any of the preceding claims in which the root wall thickness is between 97% and 1% of an original or peak wall thickness.

5. A tube as claimed in any of the preceding claims in which the corrugations extend radially about the tube.

6. A tube as claimed in any of claims 1 to 4 in which the corrugations extend axially about the tube.

7. A tube as claimed in any of the preceding claims in which the plastics is a thermoplastics.

8. A tube as claimed in claim 6 or 7 wherein the thermoplastics is high density polyethylene.

9. A tube as claimed in claim 8 wherein the high density polyethylene is compressed at a temperature below 120°C.

10. A tube as claimed in claim 2, in which the root has a width of between 10 and 200% of the peak wall thickness.

11. A tube as claimed in claim 3, in which the root has a width of between 30 and 600% of the peak wall thickness.

12. A tube as claimed in any of the preceding claims, in which the root is radiussed.

13. A method of producing a corrugated tube having a series of peaks and roots by the application of a compressive force wherein the tube is thinned at its root region by applying a compressive force which displaces material from the root region of the tube, characterised in that the compressive force is sufficient to take the plastics of the tube which is at a temperature below its melt temperature beyond its elastic point.

## Patentansprüche

1. Wellkunststoffrohr, das über folgendes verfügt: Eine Wand mit einer Innen- und einer Außenfläche und Wellungen, welche eine Reihe von Wellenbergen und Wellentälern entlang dem Rohr definieren, wobei die Dicke der Wand zwischen der Innen- und Außenfläche der Wand an den Wellenbergen, die Wellenberg-Wanddicke W, größer ist als die Dicke zwischen der Innen- und Außenfläche der Wand an den Wellentälern, die Wellental-Wanddicke W₁, worin das Rohr einer Druckkraft unterzogen wurde, um Material im Wellentalbereich zu verschieben, dadurch gekennzeichnet, daß die aufgebrachte Druckkraft ausreichend war, um den Kunststoff des Rohrs, welcher sich bei einer Temperatur unter seiner Schmelztemperatur befindet, jenseits seines elastischen Punktes zu bringen.

2. Rohr nach Anspruch 1, worin die Innenfläche des Rohrs im wesentlichen eben ist.

3. Rohr nach Anspruch 1, worin die Innenfläche des Rohrs gewellt ist.

4. Rohr nach einem der vorangehenden Ansprüche, worin die Wellental-Wanddicke zwischen 97% und 1% einer Original- oder Wellenberg-Wanddicke ist.

5. Rohr nach einem der vorangehenden Ansprüche, worin sich die Wellungen radial über das Rohr erstrecken.

6. Rohr nach einem der Ansprüche 1 bis 4, worin sich die Wellungen axial über das Rohr erstrecken.

7. Rohr nach einem der vorangehenden Ansprüche, worin der Kunststoff ein Thermoplast ist.

8. Rohr nach Anspruch 6 oder 7, worin der Thermoplast Polyethylen hoher Dichte ist.

9. Rohr nach Anspruch 8, worin das Polyethylen hoher Dichte bei einer Temperatur unter 120°C komprimiert wird.

10. Rohr nach Anspruch 2, worin das Wellental eine Breite zwischen 10 und 200% der Wellenberg-Wanddicke besitzt.

11. Rohr nach Anspruch 3, worin das Wellental eine Breite zwischen 30 und 600% der Wellenberg-Wanddicke besitzt.

12. Rohr nach einer der vorangehenden Ansprüche, worin das Wellental gerundet ist.

13. Verfahren zum Herstellen eines Wellrohrs mit einer Reihe von Wellenbergen und Wellentälern durch die Applikation einer Druckkraft, worin das Rohr in seinem Wellentalbereich durch Aufbringen einer Druckkraft, welche Material aus dem Wellentalbereich des Rohrs verschiebt, verdünnt wird, dadurch gekennzeichnet, daß die Druckkraft ausreicht, um den Kunststoff des Rohrs, welcher sich bei einer Temperatur unter seiner Schmelztemperatur befindet, jenseits seines elastischen Punktes zu bringen.

## Revendications

1. Tube ondulé en matière plastique présentant une paroi avec une surface intérieure et une surface extérieure, et des ondulations qui définissent une série de pics et de racines le long du tube, I'épaisseur de la paroi entre la surface intérieure et la surface extérieure de la paroi, au niveau des pics - l'épaisseur de paroi de pic W - est supérieure à l'épaisseur entre la surface intérieure et la surface extérieure de la paroi, au niveau des racines - I'épaisseur de paroi de racine W₁ - dans lequel le tube a été soumis à une force de compression pour déplacer de la matière dans la région de racine, caractérisé en ce que la force de compression appliquée était suffisante pour amener la matière plastique du tube, qui est à une température qui se situe en dessous de sa température de fonte, au-delà de son point élastique.

2. Tube selon la revendication 1, dans lequel la surface intérieure du tube est sensiblement plane.

3. Tube selon la revendication 1, dans lequel la surface intérieure du tube est ondulée.

4. Tube selon l'une quelconque des revendications précédentes, dans lequel I'épaisseur de paroi de racine est située entre 97% et 1% d'une épaisseur de paroi initiale ou de pic.

5. Tube selon l'une quelconque des revendications précédentes, dans lequel les ondulations s'étendent radialement autour du tube.

6. Tube selon l'une quelconque des revendications 1 à 4, dans lequel les ondulations s'étendent axialement autour du tube.

7. Tube selon l'une quelconque des revendications précédentes, dans lequel la matière plastique est constituée d'un thermoplastique.

8. Tube selon la revendication 6 ou 7, dans lequel le thermoplastique est constitué de polyéthylène de haute densité.

9. Tube selon la revendication 8, dans lequel le polyéthylène de haute densité est comprimé à une température en dessous de 120°C.

10. Tube selon la revendication 2, dans lequel la racine a une largeur située entre 10 et 200% de l'épaisseur de paroi de pic.

11. Tube selon la revendication 3, dans lequel la racine a une épaisseur située entre 30 et 600% de l'épaisseur de paroi du pic.

12. Tube selon l'une quelconque des revendications précédentes, dans lequel la racine est arrondie.

13. Procédé de réalisation d'un tube ondulé, présentant une série de pics et de racines, par l'application d'une force compressive où le tube est réduit à sa région de racine, en appliquant une force compressive qui déplace de la matière depuis la région de racine du tube, caractérisé en ce que la force compressive est suffisante pour amener la matière plastique du tube, qui est à une température qui se situe en dessous de sa température de fonte, au-delà de son point élastique.
